# FASCICULE DE BREVET EUROPEEN

(11) **EP 3 206 160 B1**
(45) Date de publication et mention de la délivrance du brevet: **21.11.2018**
(21) Numéro de dépôt: 17155332.4
(22) Date de dépôt: 09.02.2017
(51) Int. Cl.: G06K 9/00, G06K 9/20

(54) **PROCEDE DE TRAITEMENT BIOMETRIQUE D'IMAGES**
VERFAHREN ZUR BIOMETRISCHEN AUFBEREITUNG VON BILDERN
METHOD FOR BIOMETRIC PROCESSING OF IMAGES

(30) Priorité: 09.02.2016 FR 1651010
(43) Date de publication de la demande: 16.08.2017
(73) Titulaire: Idemia Identity & Security France, 92130 Issy-les-Moulineaux (FR)
(72) Inventeur: FOURRE, Joël-Yann, 92445 Issy-Les-Moulineaux (FR); THIEBOT, Alain, 92445 Issy-Les-Moulineaux (FR); GUILLEMOT, Florence, 92445 Issy-Les-Moulineaux (FR); CHIU, Rémy, 92445 Issy-Les-Moulineaux (FR); PEYRONNEAUD, Benjamin, 92445 Issy-Les-Moulineaux (FR)
(74) Mandataire: Regimbeau

(56) Documents cités:
- EP-A1- 2 919 157
- EP-A2- 1 318 473
- FR-A1- 3 015 728

## Description

La présente invention se rapporte à un procédé de traitement biométrique d'images d'une partie du corps humain présentant des crêtes papillaires, et à un capteur d'empreinte mettant en oeuvre ledit procédé.

L'identification par empreintes papillaires est une des techniques les plus utilisées en biométrie. Les empreintes papillaires sont formées par des crêtes papillaires présentes sur l'épiderme en surface de la peau. Ces crêtes papillaires, aussi appelées dermatoglyphes, sont l'exacte projection du dessin présent en profondeur sur le derme. Les crêtes papillaires présentent l'avantage d'être individuelles, immuables, et inaltérable, sauf altération profonde du derme.

Les parties du corps humain présentant des empreintes papillaires sont principalement constituées par les doigts, et on parle alors d'empreintes digitales, mais également par les paumes ou la plante des pieds. Plusieurs technologies sont possibles pour acquérir des empreintes papillaires à des fins d'identification. L'acquisition d'une image optique des empreintes digitales d'un doigt est la plus couramment utilisée et sera utilisée pour illustrer la présente invention. On parlera donc par la suite de doigt pour désigner la partie du corps humain présentant des empreintes papillaires, et d'empreintes digitales pour désigner les empreintes papillaires.

Cependant, les technologies courantes d'acquisition d'empreintes papillaires telles que la technologie de réflexion totale interne présentent un encombrement important, notamment lié à l'utilisation d'un prisme et d'une optique pour former l'image, qui a poussé à l'emploi de technologies capacitives ou thermiques pour les capteurs embarqués dans des terminaux portables tels que des ordinateurs ou des téléphones portables, dont les performances sont néanmoins nettement inférieures. Ces capteurs capacitifs ou thermiques peuvent être réalisés par des procédés de microélectronique sur silicium ou sur verre et permettent une épaisseur très faible.

Pour réduire l'encombrement des capteurs, des capteurs optiques plats ont été développés, par lesquels une image d'un doigt illuminé est acquise et analysée pour identifier un individu. Ces capteurs optiques plats comprennent généralement des éléments sensibles à la lumière constituant un imageur réalisés sur un substrat par des procédés de microélectronique ou d'électronique imprimée. Le substrat peut être en silicium ou avantageusement en verre ou en plastique. Dans ce cas, on utilisera des technologies TFT (de l'anglais "thin film transistor" pour transistor à film fin) ou OTFT (de l'anglais "organic thin film transistor" pour transistor à film fin organique) pour réaliser une matrice active. Ces capteurs optiques nécessitent une source de lumière.

Un arrangement possible et avantageux consiste à placer une source de lumière diffuse éclairant le champ d'acquisition de l'imageur optique. La source de lumière diffuse peut ainsi être placée à l'arrière du capteur, par exemple être un écran plat émissif en technologie LCD ou OLED. La lumière passe alors à travers le substrat du capteur pour éclairer le ou les doigts. Les éléments sensibles du capteur sont ainsi réalisés qu'ils ne sont pas sensibles à la lumière venant de la face arrière. Ceci est usuellement réalisé par un dépôt métallique opaque réalisé en dessous de l'élément sensible et avantageusement constituant l'électrode inférieur de celui-ci. Lorsqu'au moins un doigt est apposé en contact du capteur, la lumière rétrodiffusée par celui-ci atteint les éléments sensibles et permet de former une image. La quantité de lumière rétrodiffusé diffère significativement lorsque le doigt est en contact avec le capteur (cas d'une crête) ou ne l'est pas (cas d'une vallée). Cet arrangement permet d'obtenir une image des empreintes digitales du doigt apposé en contact du capteur.

La source de lumière peut également être placée dans le même plan que le capteur, par exemple en interposant sur un même substrat les éléments sensibles du capteur et les éléments émetteurs de lumière de la source de lumière diffuse.
Cependant, plusieurs facteurs peuvent dégrader la qualité de l'image des empreintes digitales ainsi acquises. La qualité d'une image d'empreintes digitales acquise avec un capteur optique dépend ainsi de la pression exercée par le doigt à la surface du capteur, de l'humidité du doigt, et surtout de la lumière extérieure, c'est-à-dire un éclairage autre que celui émis par le capteur, typiquement le soleil ou un éclairage artificiel dans l'environnement.

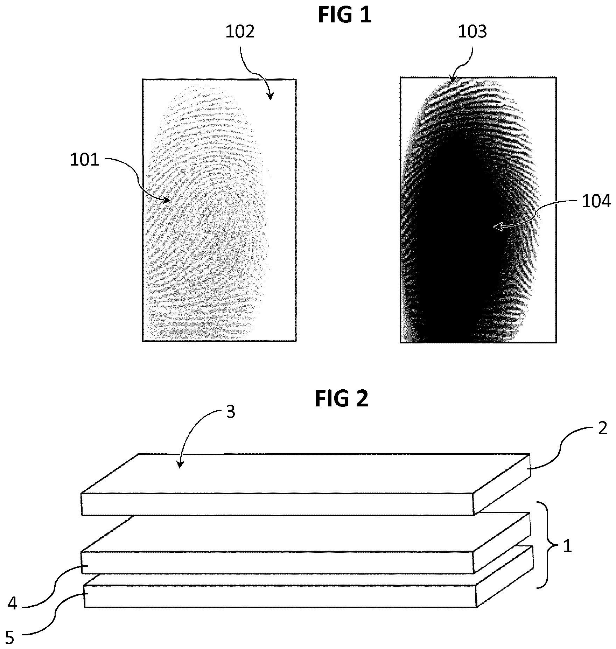

La figure 1 illustre les effets de différentes conditions d'éclairage lorsque la lumière extérieure est de forte intensité sur les images d'empreintes digitales dans l'état de la technique, avec une source d'éclairage diffuse uniforme.

Sur l'image de gauche, l'intensité de la source lumineuse du capteur est réglée pour imager correctement le centre 101 du doigt. La forte lumière extérieure a pour conséquence que la périphérie de la partie du doigt en contact avec le capteur n'est pas imagée en raison de la saturation par surexposition des bords du doigt, ce qui se traduit dans l'image acquise par le capteur par une zone blanche 102. Sur l'image de droite, l'intensité de la source lumineuse du capteur est réglée pour imager correctement les bords 103 du doigt, et on observe alors une zone sombre 104 par sous-exposition du centre du doigt.

Tant la zone blanche 102 que la zone sombre 103 correspondent à des zones dont il n'est pas possible de distinguer avec une fiabilité suffisante les caractéristiques exploitables des empreintes digitales (les minuties). La lumière ambiante peut donc se traduire par une perte d'information sur le doigt, et donc par l'impossibilité de mettre en oeuvre un procédé biométrique sur l'image acquise, ou par une moindre fiabilité de celui-ci.

Plusieurs solutions ont été proposées pour améliorer la robustesse d'un capteur d'empreinte à la lumière extérieure, mais celles-ci présentent plusieurs inconvénients, par exemple un surcoût conséquent ou une incompatibilité avec un capteur plat de faible encombrement. Par exemple, WO 2013/071311 propose de réduire l'intensité de la lumière ambiante par une structure de couches bloquant celle-ci. FR2757974 et FR2757975 proposent d'acquérir une image du doigt éclairé par la source lumineuse du capteur et du doigt éclairé seulement par la lumière extérieure pour éliminer par soustraction la lumière extérieure. Cette solution est cependant sensible au mouvement du doigt entre les acquisitions des deux images. De plus, elle ne permet pas de retrouver correctement l'information si une des images est saturée. EP2919157 propose d'adapter l'éclairage en fonction de la position de la main. US 2004/0252867 propose d'utiliser un filtre vert pour profiter du fait que peu de lumière verte traverse un doigt. On perd ainsi cependant de nombreuses informations spectrales. Or, celles-ci peuvent être utiles pour valider l'authenticité d'un doigt. La réalisation d'un tel filtre augmente aussi la difficulté de production du capteur car ce filtre doit être robuste, mince, et avoir une performance maintenue même pour des rayons d'incidence très oblique.

En effet, il est possible d'utiliser des leurres, des faux doigts reproduisant les caractéristiques sur la base desquelles se fondent l'analyse de l'image, comme par exemple des empreintes digitales. Ceux-ci peuvent par exemple être réalisés par moulage d'un doigt en silicone ou dans tout matériau souple.

Il est donc nécessaire de prévoir que le traitement biométrique permette de valider que l'objet analysé est bien un élément authentique d'un corps humain, et non une fraude ou un leurre. Plusieurs possibilités ont été explorées à cette fin, telles que l'utilisation de mesures électriques ou ultrasoniques. Par exemple, le brevet FR2849244 propose d'utiliser des électrodes transparentes ajoutées à la surface d'un capteur optique pour réaliser une mesure d'impédance en complément de l'acquisition par le capteur de l'image des empreintes digitales. Ceci présente le défaut d'ajouter des étapes de processus de fabrication supplémentaires à la surface du capteur qui peuvent dans certains cas être techniquement difficiles à mettre en oeuvre si les couches constituant le capteur sont fragiles comme lors de l'utilisation d'éléments organiques. Ces électrodes doivent de plus résister aux contacts répétés de doigts et peuvent présenter des problèmes de fiabilité si elles sont abrasées. Ceci présente aussi un coût supplémentaire en termes de fabrication et d'électronique de mesure de l'impédance. En outre, pour un capteur de grande surface, par exemple prévu pour au moins quatre doigts ou pour la paume, il faut multiplier le nombre d'électrodes, ce qui complique l'électronique de pilotage et ralentit l'acquisition si l'on doit mesurer des impédances représentatives de l'ensemble de la surface en contact avec le capteur.

Cependant, il est préférable de pouvoir détecter les fraudes au moyen de l'image acquise par l'imageur. Il n'est alors pas nécessaire de prévoir d'éléments supplémentaires tels que des instruments de mesure d'impédance. On peut ainsi mettre en oeuvre cette détection dans un capteur existant sans avoir à modifier celui-ci.

Parmi les solutions de validation basée sur l'optique, la demande FR3015728 propose un procédé de validation de l'authenticité d'un doigt s'appuyant sur l'absorption et la diffusion de la lumière en plusieurs couleurs. Cependant, ce procédé requiert que le doigt à analyser recouvre un champ d'émission prédéterminé des sources lumineuses, ce qui ne pose pas de problème pour un capteur de petite dimension destiné à n'acquérir l'image que d'un seul doigt à une position prédéterminée. En revanche, cela pose problème dans le cas d'un capteur de grande dimension, où la position du ou des doigts ne peut être prédéterminée.

Par ailleurs, dans la plupart des capteurs détectant les fraudes au moyen d'une illumination particulière du doigt, un unique motif d'éclairage prédéterminé est utilisé. Par exemple, une matrice de diodes électroluminescentes projette sur le doigt un motif dicté par la répartition desdites diodes électroluminescentes. La localisation déterministe de la source d'éclairage et donc de la zone d'analyse peut constituer une faille pour la détection de fraude.

Il peut être prévu d'illuminer le doigt au moyen de deux motifs d'éclairages prédéterminés, mais rarement plus, par exemple en n'allumant qu'une partie des diodes électroluminescentes à chaque fois. De fait, les capacités d'une matrice de diodes électroluminescentes en termes de nombre de motifs possibles sont limitées par l'encombrement et le coût. Ainsi, il est difficile de réaliser des formes compliquées. De plus, il est délicat de superposer des motifs de couleurs différentes puisqu'ils sont projetés par des diodes électroluminescentes différentes.

### PRESENTATION DE L'INVENTION

L'invention a pour but de remédier au moins en partie à ces inconvénients, et de proposer un procédé permettant l'acquisition d'image d'empreintes papillaires de bonne qualité et permettant la détection de fraudes.

A cet effet, il est proposé un procédé défini par la revendication 1.

Le procédé présente de nombreux avantages. Le second motif étant déterminé à partir de la première image, il peut être spécialement adapté aux spécificités identifiées par celles-ci, que ce soient en termes de conditions d'acquisitions (éclairage, positionnement,...) qu'en termes de finalités à atteindre (identification, détection de fraude, etc...). Ainsi, la seconde image peut présenter une qualité augmentée par rapport à la première image, par exemple en termes d'homogénéité de l'intensité lumineuse, de contraste, ou présenter des caractéristiques propres à la mise en oeuvre d'étapes dédiées, telle qu'une étape de détection de fraude au moyen de figures lumineuses judicieusement placées. En outre, le procédé peut être réitéré plusieurs fois. Le procédé est avantageusement complété par les caractéristiques suivantes, prises seules ou en quelconque de leurs combinaisons techniquement possibles:
- le traitement biométrique de la deuxième image comprend une étape de détection, parmi les pixels de ladite deuxième image, des pixels correspondant à des crêtes papillaires;
- la détermination du second motif comprend une détermination de la distribution spatiale de l'intensité lumineuse dans la première image, et le second motif est déterminé à partir de l'inverse de ladite distribution spatiale;
- le traitement biométrique comprend l'analyse dans l'image finale de la décroissance d'une intensité lumineuse à partir d'endroits de la deuxième image correspondant aux projections desdites figures géométriques sur la partie du corps humain éclairées par le second motif affiché par l'écran émissif;
- la détermination du second motif comprend une analyse de la première image pour localiser la représentation au moins partielle de la partie du corps humain dans la première image, et les figures géométriques du second motif sont localisées dans le second motif d'affichage au niveau d'une zone correspondant à ladite représentation de la partie du corps humain dans la première image, de sorte que les figures géométriques sont affichées par l'écran émissif en regard de la partie du corps humain;
- l'analyse de la première image comprend la localisation dans la représentation de la partie du corps humain dans la première image d'une région représentative d'une particularité visuelle de ladite partie du corps humain, et la zone dans laquelle sont localisées les figures géométriques du second motif correspond à ladite région représentative d'une particularité visuelle de ladite partie du corps humain, de sorte que les figures géométriques sont affichées par l'écran émissif en regard de ladite région représentative d'une particularité visuelle de ladite partie du corps humain;
- les figures géométriques du second motif sont espacées d'au moins 2 mm entre elles et sont disposées aléatoirement;
- plusieurs seconds motifs d'affichage sont déterminés à partir de la première image, et, successivement pour au moins plusieurs desdits second motifs d'affichage, l'écran émissif affiche au moins un desdits seconds motifs pour éclairer ladite partie du corps humain et l'imageur acquiert au moins une deuxième image de ladite partie du corps humain.
- au moins un desdits seconds motifs est constitué de couleurs dans des longueurs d'onde inférieures à 600 nm et un autre desdits second motifs est constitué de couleurs dans des longueurs d'onde supérieures à 600 nm.

L'invention concerne également un capteur défini par la revendication 11.

L'invention concerne également un produit programme d'ordinateur comprenant des instructions de code de programme pour l'exécution des étapes du procédé selon l'un des modes de réalisation de l'invention lorsque ledit programme est exécuté par un ordinateur. De préférence, le produit programme d'ordinateur prend la forme d'une mémoire non volatile lisible par ordinateur telle qu'un disque optique, un disque dur ou une mémoire à semiconducteurs dite "mémoire flash".

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:
- la figure 1, déjà commentée, illustre deux exemples d'images d'empreintes digitales acquises par un capteur biométrique mettant en oeuvre un procédé selon l'état de la technique;
- la figure 2 illustre schématiquement la structure d'un capteur biométrique adapté pour mettre en oeuvre l'invention;
- les figures 3a, 3b et 3c illustrent de façon schématique des exemples respectivement d'une première image, d'un second motif, et d'une deuxième image selon un mode de réalisation possible de l'invention;
- les figures 4 et 5 illustrent de façon schématique des exemples de seconds motifs selon des modes de réalisation possible de l'invention;
- les figures 6a, 6b et 6c illustrent un exemple de mise en oeuvre du mode de réalisation de la figure 4;
- les figures 7a, 7b et 7c illustrent un exemple de mise en oeuvre du mode de réalisation de la figure 5;
- la figure 8 illustre schématiquement des exemples de courbes d'intensité lumineuse de points de la deuxième image en fonction de la position desdits points selon un mode de réalisation possible de l'invention.

### DESCRIPTION DETAILLEE

Un capteur utilisé par le procédé de l'invention est un capteur optique plat comprenant des éléments sensibles à la lumière constituant un imageur. Ces éléments sensibles peuvent être réalisés sur un substrat par des technologies TFT, par exemple sur verre et OTFT, par exemple sur plastique. Avantageusement, le substrat peut être transparent et le capteur insensible à la lumière venant de la face arrière. Ces capteurs optiques nécessitent une source de lumière. Un arrangement possible et avantageux consiste à placer une source de lumière à l'arrière du capteur, par exemple un écran plat émissif en technologie LCD ou OLED. Une autre solution est de réaliser sur le substrat même du capteur des éléments émissifs de type OLED. On peut utiliser des technologies TFT ou OTFT, et un substrat en verre ou en plastique.

En référence à la figure 2, un exemple de capteur adapté pour la mise en oeuvre du procédé de traitement biométrique comprend un écran émissif 1 et un imageur 2 constitué par un substrat sur lequel sont réalisés des éléments sensibles à la lumière. L'écran émissif 1 et l'imageur 2 partagent la même orientation : l'écran émissif 1 est configuré pour illuminer le champ d'acquisition de l'imageur 2. L'écran émissif 1 et l'imageur 2 peuvent être superposés ou coplanaires. Le capteur comprend une surface 3 adaptée pour recevoir en contact une partie du corps humain à imager. L'écran émissif 1 est configuré pour éclairer la partie du corps humain lorsqu'elle est en contact avec la surface 3. L'écran émissif comprend une matrice de pixels 4 individuellement commandables. L'état des pixels de la matrice 4 définit le motif d'affichage de l'écran émissif.

On entend par motif d'affichage l'ensemble formé par les caractéristiques lumineuses de l'affichage, en termes d'intensité lumineuse, de répartition, de forme lumineuse, de position, de couleur ... Ainsi, deux motifs d'affichage peuvent différer par exemple par l'image affichée, l'intensité et/ou la couleur.

Les éléments sensibles à la lumière de l'imageur 2 sont ainsi réalisés qu'ils ne sont pas sensibles à la lumière venant directement de l'écran. Ceci peut être rendu possible en utilisant l'électrode inférieure alors réalisée avec un métal comme écran à la lumière. Eventuellement d'autres dépôts opaques peuvent être utilisés sous l'élément sensible. Des espaces où il n'y a aucun dépôt opaque sont aménagés entre les éléments sensibles afin de laisser une portion de la lumière émise par l'écran traverser le capteur. Cette portion peut être comprise entre 2 et 50%. Dans le cas où les OLEDs sont réalisés sur le même substrat que les éléments sensibles à la lumière, il n'y a plus de contrainte de transparence particulière du substrat. Il faut cependant réaliser des fonctions de bafflage adaptées, c'est-à-dire de protection optique, pour que les éléments sensibles ne soient pas éblouis par la lumière venant directement des éléments émissifs.

Dans l'exemple illustré par la figure 2, l'écran émissif 1 comprend une matrice de pixel 4 et un organe de rétroéclairage 5 disposé derrière la matrice de pixel 4. On entend par derrière le côté opposé à la direction dans laquelle est située la surface 3, qui est également la direction d'éclairage de l'écran émissif 1. Il s'agit par exemple d'une configuration d'un écran de type à cristaux liquides ou OLED. Le substrat sur lequel sont réalisés les éléments sensibles à la lumière formant l'imageur 2 est ici au-dessus de l'écran émissif 1. Le substrat est alors transparent pour laisser passer la lumière émise par l'écran émissif 1. La surface 3 est alors la surface de l'imageur 2.

D'autres configurations sont possibles, avec par exemple un écran émissif 1 comprenant une matrice de diodes électroluminescentes organiques émettant de la lumière, qui peuvent être disposées au-dessus (i.e. dans la direction d'éclairage) de l'imageur 2. Dans ce cas, la surface 3 est celle de l'écran émissif 1. Il n'est pas alors nécessaire que le substrat de l'imageur 2 soit transparent. De préférence, l'écran OLED doit alors présenter à la fois une caractéristique de transparence (il laisse passer au moins 2% de la lumière arrivant du dessus vers le capteur) et une émission de lumière uniquement vers la face supérieure peut être utilisé au-dessus du capteur. Il est également possible de prévoir que l'écran émissif 1 soit dans le même plan que l'imageur 2, en interposant les éléments sensibles de l'imageur 2 et les éléments émetteurs de lumière de l'écran émissif 1.

Les éléments sensibles sont par exemples réalisés sur un substrat en verre et constitués de photo détecteurs, par exemple des photodiodes PIN réalisées à partir de silicium, des photodiodes organiques, ou bien tout autre élément sensible à la lumière. Le substrat pourrait également être en plastique, ou toute autre matière adéquate, permettant l'association avec un écran émissif.

A l'instar de l'écran émissif dont les pixels sont individuellement adressables en ligne et en colonne pour commander leur état, et donc le motif d'affichage, les éléments sensibles forment des pixels adressables, notamment pouvant être lus. De manière conventionnelle, chaque pixel comporte un transistor de sélection, et ils sont organisés en ligne et en colonnes. Les commandes des transistors de sélection sont communes sur une ligne, et la lecture des niveaux des pixels se fait en colonne. Les transistors de sélection ou d'adressage sont par exemple des transistors à couche mince (TFT).

De préférence, l'électronique de l'adressage en ligne des éléments sensibles est en totalité ou en partie réalisée sur le substrat, notamment pour limiter le nombre de connexions du substrat et donc le coût du système, ou permettre d'atteindre des résolutions supérieures. Dans le cas d'un substrat en verre, l'intégration de l'électronique requise pour l'adressage est favorisée par l'utilisation de la technologie TFT poly-Si ou les solutions de transistors en oxyde (oxyde de zinc gallium indium IGZO par exemple). Les solutions TFT en silicium amorphe ne permettent pas une intégration aussi complète de l'électronique d'adressage, mais permettent cependant de réaliser les pixels. Les solutions OTFT (transistor organique réalisé sur verre ou plus souvent plastique) permettent aussi de réaliser un tel capteur.

Les pixels de l'écran émissif 1 et les pixels de l'imageur 2 peuvent ne pas avoir la même distribution, et en particulier ne pas présenter la même densité. Ainsi, l'écran émissif peut présenter une densité d'éléments émetteurs différente de la densité des éléments sensibles de l'imageur, par exemple inférieure ou supérieure. Par ailleurs, la surface de l'écran émissif 1 peut être différente de la surface de l'imageur 2, et peut ainsi avantageusement être plus grande.

Le capteur peut également comprendre un système de traitement automatisé de données composé d'une ou plusieurs unités de traitement, de mémoire, de logiciel, de données, d'organes d'entrées-sorties et de liaisons, notamment pour commander l'affichage de l'écran émissif 1, l'acquisition d'image par l' imageur 2, et le traitement des images acquises par ledit imageur 2. Le système de traitement automatisé de données peut également être extérieur au capteur, et être par exemple un ordinateur communiquant avec le capteur.

Le capteur est configuré pour mettre en oeuvre un procédé de traitement biométrique d'images d'une partie du corps humain présentant des crêtes papillaires, dans lequel des images de la partie du corps humain sont acquises par le capteur. Plus précisément, le procédé comprend les étapes selon lesquelles, pour acquérir des images d'une partie du corps humain présentant des crêtes papillaires au contact de la surface :
- l'écran affiche au moins un premier motif d'affichage pour éclairer ladite partie du corps humain et l'imageur acquiert au moins une première image de ladite partie du corps humain,
- à partir de cette première image, le système de traitement automatisé de données détermine au moins un second motif d'affichage différent du premier motif,
- l'écran affiche au moins le second motif pour éclairer ladite partie du corps humain et l'imageur acquiert au moins une deuxième image de ladite partie du corps humain.

### Affichage du premier motif

Dans une configuration typique, le premier motif affiché par l'écran émissif 1 est un motif prédéterminé, indépendant des caractéristiques de la partie du corps humain en contact avec la surface 3, et en particulier de sa disposition. Par exemple, aucune autre image de la partie du corps humain n'ayant été acquise préalablement, le capteur ne dispose donc d'aucune information sur celle-ci, et le premier motif d'affichage est donc un motif d'affichage générique. Dans le cas le plus simple, le premier motif d'affichage est par exemple un motif uniforme, permettant un éclairage diffus de la partie du corps humain en contact avec la surface 3. Le premier motif d'affichage peut également proposer des indications pour la personne qui doit apposer ses doigts sur la surface 3, par exemple un marquage indiquant la position attendue des doigts, ou des instructions. De préférence cependant, le premier motif d'affichage est dénué de zones sombres de grande étendue.

### Acquisition de la première image

La partie du corps humain en contact avec la surface 3 étant éclairée par l'affichage du premier motif d'affichage, l'imageur 2 acquiert au moins une première image de ladite partie du corps humain. Plus précisément, la lumière rétrodiffusée par la partie du corps humain arrive sur l'imageur 2, qui acquiert donc une image de la lumière renvoyée par ladite partie du corps humain. Plusieurs images peuvent être acquises, notamment en changeant de premier motif d'affichage, et la première image peut être sélectionnée parmi celles-ci ou bien construite à partir de celles-ci, par exemple par combinaison des images acquises. On peut ainsi par exemple utiliser plusieurs premiers motifs d'affichage de couleurs différentes et/ou d'intensités différentes

### Détermination du second motif

Pour l'acquisition d'une deuxième image, l'écran 1 affiche un second motif, différent du premier motif. Ce second motif dépend de la première image : le second motif est déterminé à partir de la première image par le système de traitement automatisé de données, qui procède donc à une analyse de ladite première image.

L'analyse de la première image peut être effectuée pour localiser la représentation de la partie du corps humain dans ladite première image. L'analyse de la première image peut comprendre l'identification de zones d'intérêt.

Notamment, l'analyse de la première image peut comprendre l'identification des crêtes et des vallées représentatives d'une empreinte digitale, et le classement des pixels de la première image en fonction de cette identification. L'identification des crêtes et des vallées peut être réalisée par une binarisation de la première image, c'est-à-dire à une amplification des différences de caractéristiques entre pixels se répartissant en deux classes : ceux présentant des caractéristiques propres à des crêtes et ceux présentant des caractéristiques propres à des vallées. Typiquement, les crêtes apparaissent généralement plus claires dans la première image tandis que les vallées apparaissent généralement plus sombres dans la première image. Ensuite, une méthode de classification peut être utilisée, comme par exemple la méthode d'Otsu pour calculer un seuil séparant ces deux classes afin que leur variance intra-classe soit minimale. Avantageusement une version locale de la méthode d'Otsu est utilisée. D'autres méthodes, notamment basées sur leurs propriétés optiques respectives, peuvent être employées pour différencier chacune les régions de crêtes et les régions de vallées.

Discriminer ainsi les zones d'une image d'une empreinte digitale relatives aux vallées de celles relatives aux crêtes permet de mettre en évidence de possibles biais liés à la qualité du contact optique entre la partie du corps humain observée et la surface 3. En effet, les représentations dans les images des crêtes ou des vallées en contact avec la surface 3 sont différemment affectées par l'état de la peau, et notamment par son humidité.

Par exemple, lorsqu'un doigt est humide ou gras, le contact optique est favorisé car l'humidité ou la graisse assure un bon couplage optique. A l'inverse, lorsque le doigt est sec, le couplage entre la surface 3 et la partie du corps humain n'est pas optimale. Toutefois, pour un doigt très gras ou très humide, le nombre de pixels de vallée exploitables peut être trop faible. Par ailleurs, les zones relatives aux crêtes présentent généralement un niveau de signal plus intense, donc un meilleur rapport signal à bruit.

Par conséquent, les caractéristiques pouvant être mises en évidence varient selon qu'on exploite les zones d'une image d'une empreinte digitale relatives aux vallées ou relatives aux crêtes, et selon les conditions d'acquisition d'image. On procède donc de préférence à une analyse séparée pour ces deux types de zones, voire pour seulement l'un de ces types.

Le second motif d'affichage est destiné à être affiché par l'écran émissif 1 de sorte à éclairer la partie du corps humain en contact avec la surface 3 lorsque l'imageur 2 acquiert la deuxième image. Afin de permettre d'obtenir des informations supplémentaires par rapport à la première image, le second motif est construit pour permettre la mise en évidence, sur la deuxième image, de caractéristiques utiles au procédé biométrique et non immédiatement accessible dans la première image. Le second motif peut également permettre de supprimer ou d'atténuer l'apparition dans la deuxième image d'éléments non utiles au traitement biométriques, tels que des traces de poussières, de salissure, ou bien encore des régions du corps humain non exploitées par le traitement. Ainsi, on peut chercher à faire disparaître dans la deuxième image la représentation de la seconde phalange du doigt lorsque l'on cherche seulement à exploiter les empreintes digitales présentent à l'extrémité du doigt.

Comme expliqué plus haut en référence à la figure 1, la lumière extérieure peut entraîner une perte d'informations, notamment au centre de la représentation d'un doigt ou à sa périphérie. De la même manière, certaines zones de la partie du corps humain en contact avec la surface 3 peuvent présenter des qualités variables de couplage optique avec ladite surface 3, par exemple parce qu'elles présentent des états (humidité, propreté) différentes, ou par différence de pression. Ainsi, lorsque plusieurs doigts sont apposés sur la surface 3, ils auront rarement le même couplage optique.

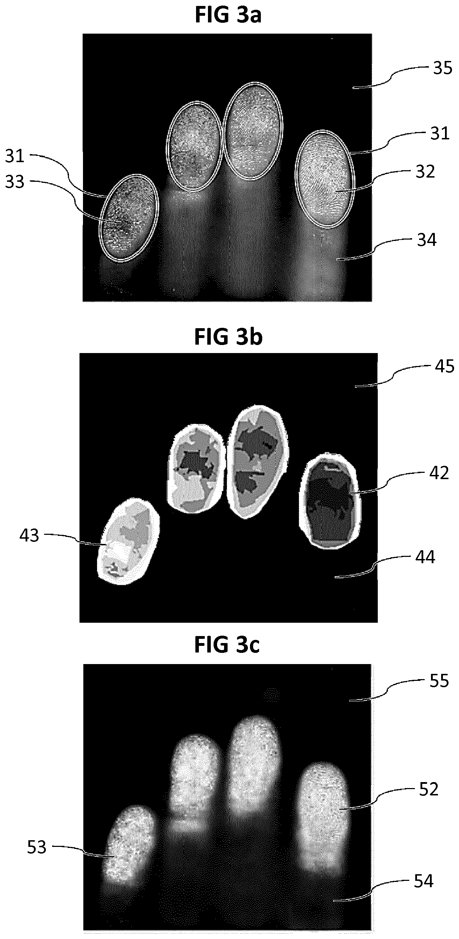

Le second motif peut donc être déterminé à partir de la première image pour améliorer la qualité et l'exploitabilité de la deuxième image par rapport à la première image. La figure 3a montre ainsi un exemple de première image, illustrant quatre doigts éclairés par un premier motif d'affichage uniforme. Les ellipses 31 indiquent les localisations de la représentation de la partie du corps humain dans la première image. Les ellipses 31 entourent ainsi les représentations de la dernière phalange de chacun des quatre doigts, et plus précisément leur pulpe, c'est-à-dire l'extrémité charnue de leur face interne, la peau desquels portent les empreintes digitales.

Sur cette première image, les extrémités des quatre doigts n'apparaissent pas de façon identique. L'extrémité 32 du doigt le plus à droite apparaît ainsi plus lumineuse que l'extrémité 33 du doigt le plus à gauche. D'autres éléments apparaissent, qui peuvent ne pas être exploités par le traitement biométrique, et qui peuvent alors altérer le traitement biométrique de l'image. Par exemple, le reste 34 des doigts, c'est-à-dire les deux premières phalanges, peuvent apparaître en raison de leur proximité avec la surface 3. De même, la zone 35 de la surface 3 dans laquelle est absente la partie du corps humain présentée au capteur, peut contenir des éléments parasites tels que des salissures, ou bien issus d'une lumière extérieure.

Le second motif peut être déterminé pour améliorer la qualité d'image des zones exploitables de la partie imagée du corps humain, c'est-à-dire les zones situées à l'intérieur des ellipses 31 dans l'exemple, et minimiser l'influence des autres éléments. La figure 3b montre un exemple de second motif déterminé à partir de la première image de la figure 3a.

La détermination du second motif comprend le positionnement de zones d'éclairage 42, 43 dans le second motif correspondant à la localisation de la représentation 32, 33 de la partie du corps humain dans la première image, de sorte que la partie du corps humain en contact avec la surface est éclairée par lesdites zones d'éclairage 42, 43 lorsque l'écran émissif 1 affiche le second motif. Le second motif peut comprendre au moins une zone 45 de non éclairage correspondant à l'extérieur de la représentation de la partie du corps humain dans la première image. De même, on constate l'absence d'éclairage au niveau de la représentation des parties des doigts non utiles au traitement biométrique dans la première image, c'est-à-dire au niveau de la représentation 34 des deux premières phalanges des doigts imagés dans la figure 3a.

De préférence, les zones d'éclairage 42, 43 ne sont pas uniformes. En particulier, elles sont adaptées pour corriger les différences de qualité constatées sur la première image. Ainsi, la détermination du second motif comprend une détermination de la distribution spatiale de l'intensité lumineuse dans la première image, et le second motif est déterminé à partir de l'inverse de ladite distribution spatiale au moins pour la ou les zones correspondant à la représentation de la partie du corps humain. En plus de l'inversion, d'autres traitement peuvent être appliqués, tel qu'un seuillage, décalage, ou encore l'application d'une fonction de transformation, par exemple une fonction non linéaire de type gamma. On peut par exemple prévoir d'adapter l'intensité de l'éclairage, notamment pour obtenir un signal suffisant pour les doigts pigmentés.

Dans l'exemple de la figure 3b, les zones d'éclairage 42, 43 présentent une distribution lumineuse inversée par rapport à la première image de la figure 3a, échantillonnée en quatre niveaux d'intensité. Correspondant à la zone 32 de la représentation de l'extrémité de doigt la plus lumineuse sur la figure 3a, la zone 42 est la plus sombre des quatre zones d'éclairage de la figure 3b. A l'inverse, correspondant à la zone 33 de la représentation de l'extrémité de doigt la moins lumineuse sur la figure 3a, la zone 43 est la plus sombre des quatre zones d'éclairage de la figure 3b.

Comme le corps humain est assez diffusant, la première image peut être simplifiée par exemple par floutage ou sous-échantillonnage, avant de déterminer le second motif par inversion, notamment afin de gommer toute irrégularité inutile, sans altérer les effets produits par l'éclairage du doigt. Dans le cas où le procédé décrit serait réitéré plusieurs fois, le second motif pourrait être déterminé non seulement à partir de la première image, mais également à partir des seconds motifs préalablement déterminés pour la même partie du corps humain, pour accélérer l'obtention du résultat souhaité.

Le second motif peut également comprendre en tant que zones d'éclairage des figures géométriques lumineuses distinctes et séparées. Ainsi, la détermination du second motif peut comprendre la détermination des figures géométriques à afficher (type, couleur, ...) et leur localisation dans le second motif.

La détermination du second motif peut alors comprendre une analyse de la première image pour localiser la représentation d'au moins un doigt dans la première image, et les figures géométriques distinctes et séparées du second motif sont localisées dans le second motif d'affichage au niveau d'une zone de ladite représentation dudit doigt dans la première image, de sorte que les figures géométriques soient affichées par l'écran émissif 1 en regard dudit doigt.

Plus que la simple localisation de la représentation d'un doigt, l'analyse de la première image peut comprendre la localisation dans la représentation de la partie du corps humain dans la première image d'une région représentative d'une particularité visuelle de ladite partie du corps humain. La zone dans laquelle sont localisées les figures géométriques du second motif peut alors correspondre à cette région représentative d'une particularité visuelle de ladite partie du corps humain, de sorte que les figures géométriques sont affichées par l'écran émissif 1 en regard de ladite région représentative d'une particularité visuelle de ladite partie du corps humain.

On entend par figure géométrique une forme pouvant être décrite par un objet géométrique de base tel qu'un ensemble de deux ou plusieurs points, une ligne, une courbe, une figure plane, par exemple un carré ou un cercle, ou bien encore une forme définie par une fonction, telle qu'une sinusoïde. Dans le cadre du procédé, la figure géométrique possède des contours nets et suffisamment réguliers pour qu'il soit possible de calculer de manière simple la distance de tout point par rapport à cette figure géométrique. En outre, ces figures géométriques peuvent ne recouvrir qu'une partie du second motif correspondant à la représentation du doigt dans la première image, par exemple moins de 50 %, voire moins de 20%, et plus encore, ne recouvrir qu'une petite partie du second motif, par exemple moins de 15 %, voire moins de 5 %.

Les figures géométriques peuvent être isotropes ou anisotropes, constituées d'éléments isolés ou d'ensembles d'éléments, et peuvent varier selon différentes caractéristiques telles que la périodicité, leur étendue, etc.

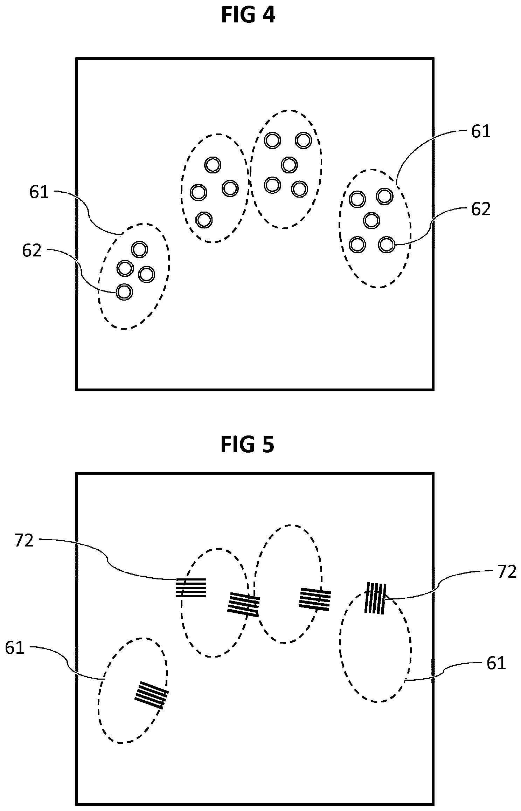

La figure 5 illustre un tel mode de réalisation, avec un second motif comprenant des figures géométriques, construit à partir de la première image de la figure 3a, dans laquelle les ellipses 31 indiquent les localisations de la représentation de la partie du corps humain dans la première image. Les ellipses 31 entourent ainsi les représentations de la dernière phalange de chacun des quatre doigts, et plus précisément leur pulpe, c'est-à-dire l'extrémité charnue de leur face interne, la peau desquels portent les empreintes digitales.

La figure 4 montre donc schématiquement un exemple de second motif d'affichage comprenant des figures géométriques, dans lequel lesdites figures géométriques sont des points 62 lumineux. Pour des raisons de lisibilités, ceux-ci sont représentés par des cercles aux contours doubles. La figure 4 montre également en pointillés des ellipses 61 positionnées en des emplacements correspondant aux ellipses 31 indiquant les localisations de la représentation de la partie du corps humain dans la première image sur la figure 3a. Ces ellipses 61 ne font pas partie du second motif, et leur présence ne sert qu'à illustrer la localisation des points 62 à l'intérieur d'une zone correspondant à la représentation des doigts dans la première image, c'est-à-dire à l'intérieur des ellipses 31 de la figure 3a. On assimilera donc par la suite ces ellipses 61 avec leur intérieur, c'est-à-dire avec les zones du second motif correspondant (spatialement) à la représentation du doigt dans la première image.

Comme dans l'exemple illustré, les figures géométriques tels que les points 62 sont disposées aléatoirement dans les zones 61 du second motif correspondant à la représentation du doigt dans la première image. La disposition peut varier par la localisation des figures géométriques et/ou par leurs orientations. On entend ici par aléatoire la caractéristique selon laquelle la disposition des figures géométriques ne présente pas d'agencement déterminable a priori ou a posteriori, et en particulier ne présente pas de symétrie. La disposition peut par exemple être aléatoire dans la localisation des figures géométriques ou dans leur orientation. De ce fait, les tentatives de fraudes sont plus difficiles à réaliser puisque les fraudeurs ne peuvent connaître à l'avance la disposition de ces figures géométriques dans le second motif. Ceci évite aussi des fraudes par re-jeu consistant à présenter au capteur une image similaire à la transaction précédente.

De préférence, la disposition des figures géométriques répond à un ensemble de contraintes. En particulier, les figures géométriques du second motif sont espacées d'au moins 2 mm entre elles, et de préférence d'au moins 4 mm, voire 6 mm entre elles. De même, les figures géométriques sont espacées d'au moins 3 mm par rapport aux bords des zones 61. Il est à noter que pour des raisons de lisibilité, l'échelle n'est pas respectée sur les différentes figures, et que par exemple les points 61 présentent typiquement un diamètre inférieur à 1 mm.

L'espacement des figures géométriques entre elles permet de s'assurer que la diffusion de la lumière par la peau d'une projection d'une figure géométrique n'interfère pas significativement avec la projection d'une autre figure géométrique distincte. De préférence, on cherche à maximiser le nombre de figures géométriques dans chaque zone 61. Puisqu'on connaît, par la première image, la configuration du positionnement de la partie du corps humain dans le champ de l'imageur 2, on peut maximiser le nombre de figures par doigt et ainsi limiter le nombre d'images nécessaires.

Un algorithme d'optimisation mis en oeuvre par le système de traitement automatisé de données peut permettre de trouver une disposition répondant à ces contraintes, et rajoutant préférentiellement une composante aléatoire.

On peut également prévoir d'éloigner les figures géométriques de zones correspondant à des singularités détectées dans la première image, pouvant correspondre à des poussières, des coupures, ridules, ou tâches, qui pourraient perturber l'analyse ultérieure. De même, on peut choisir d'écarter ces figures géométriques du bord du doigt afin d'améliorer la précision de mesure.

La figure 5 illustre schématiquement un autre exemple de second motif d'affichage comprenant des figures géométriques, dans lequel lesdites figures géométriques sont des ensembles de lignes parallèles 72. Celles-ci sont représentées comme des lignes noires, mais correspondent en réalité à des lignes lumineuses. Les lignes parallèles 72 appartiennent à un ensemble de figures qu'on peut qualifier d'anisotrope. En outre ce sont des figures qui présentent une périodicité spatiale, en l'occurrence la périodicité de la répétition des lignes. Il est à noter que les lignes pourraient tout aussi bien être des courbes. De même, des ensembles de cinq lignes sont représentées, mais leur nombre pourrait être différent. Un ensemble comprend cependant au moins deux éléments, comme deux lignes parallèles.

Ce second motif est également déterminé à partir de la première image illustrée par la figure 3a. Comme dans la figure 4, les ellipses 61 ne font pas partie du second motif, et leur présence ne sert qu'à illustrer les contours de zones correspondant à la représentation des doigts dans la première image.

Les lignes parallèles 72 sont positionnées de manière à couper les contours de zones correspondant à la représentation des doigts dans la première image, c'est-à-dire les ellipses 61. Plus précisément, les lignes parallèles 72 leur sont perpendiculaires. Comme on le verra par la suite, cette disposition de lignes parallèles 72 est particulièrement avantageuse car elle permet de s'affranchir de l'inhomogénéité du doigt près des bords de la zone en contact avec la surface 3 en permettant une analyse dans une direction parallèle aux contours identifiés.

Il est bien entendu que les différentes techniques évoquées ici sont des exemples non limitatifs, et que d'autres techniques peuvent être employées. En particulier, il est possible de combiner les techniques entre elles. Ainsi, un second motif peut par exemple comprendre à la fois des points 62 et des lignes parallèles 72. En particulier, on peut utiliser des figures géométriques différentes pour le centre des zones 61 et pour leurs périphéries. Par exemple, on peut utiliser des figures géométriques isotropes telles que les points 62 pour le centre du doigt, et des figures géométriques anisotropes pour la périphérie, comme les lignes parallèles 72, afin que les irrégularités des contours ne perturbent pas l'analyse ultérieure. De même, si une caractéristique cutanée telle qu'une cicatrice ou ridule a été détectée sur la première image, on peut également utiliser à cette localisation une figure géométrique anisotrope.

De plus, il est bien-entendu possible de ne pas afficher simultanément le même motif ou la même combinaison de motifs sur différentes zones correspondant à la représentation de différents doigts dans la première image.

De même, un second motif peut à la fois comprendre des figures géométriques et des zones d'éclairage déterminées à partir de l'inverse de la distribution spatiale de l'intensité lumineuse dans la première image. Par ailleurs, plusieurs seconds motifs différents peuvent être déterminés à partir de la même première image.

Un second motif est constitué de zones colorées. Un même second motif peut présenter plusieurs couleurs. Lorsque c'est le cas, le second motif présente de préférence des couleurs distinctes, par exemple avec des longueurs d'onde dominantes séparées d'au moins 40 nm. De préférence encore, les longueurs d'onde des couleurs sont de part et d'autres de 600 nm, avec par exemple du vert et du rouge. L'utilisation de couleurs différentes permet de tirer parti des différences de réponse de la peau humaine en fonction des longueurs d'onde.

De même que les formes des figures géométriques, les couleurs peuvent être choisies en fonction de la localisation de celles-ci dans les zones du second motif correspondant à la représentation du doigt dans la première image. On peut par exemple prendre en compte le fait que le blanchiment du doigt est généralement plus prononcé au centre qu'en périphérie de la zone de contact avec la surface 3, et donc que l'absorption de la lumière verte ou bleue, principalement liée à l'hémoglobine, est modifiée.

De même, lorsque plusieurs seconds motifs sont déterminés, un desdits seconds motifs est de préférence constitué de couleurs dans des longueurs d'onde inférieures à 600 nm et un autre desdits second motifs est constitué de couleurs dans des longueurs d'onde supérieures à 600 nm. Par exemple, un second motif peut comprendre des points 62 de couleur verte, et un autre motif des lignes parallèles 72 de couleur rouge. Les figures géométriques peuvent cependant varier en forme et en couleur. De même que leur disposition, les longueurs d'onde des figures géométriques peuvent varier de façon aléatoire, avec par exemple des alternances non prévisibles de plusieurs longueurs d'onde.

Le second motif peut également comprendre des zones d'éclairage ou des figures en dehors des zones 61 correspondant à la représentation du doigt identifiée dans la première image. En effet, il est possible que certaines zones ne puissent pas être clairement établies comme appartenant ou non à la représentation du doigt. Ce peut être le cas en cas de pollution de la surface 3 du capteur par le contact des doigts avec des gouttelettes ou des cellules mortes, ou encore par des rayures, de la condensation ou des poussières. On peut alors avoir dans la première image des artéfacts résultant de ces perturbations.

Afin de s'assurer qu'il s'agit seulement d'artéfacts et non d'une partie non identifiée de la représentation du doigt, il peut être prévu que le second motif, outre des zones d'éclairage ou des figures dans les zones 61 correspondant à la représentation du doigt identifiée dans la première image, comprenne des zones d'éclairage ou des figures en dehors de ces zones 61. Cela permet ensuite lors de l'analyse de lever le doute sur la nature de ces zones de doute. La localisation, la forme et la couleur des figures employées peuvent être adaptées à ce but. Notamment, on peut prévoir dans le second motif une zone éclairée adjacente à la zone de doute.

Par exemple, en cas de suspicion de trace, la couleur rouge peut être utilisée dans une figure adjacente à la localisation de la trace suspectée. S'il s'agit d'une partie du corps humain, la peau recouvrant celui-ci diffusera la lumière rouge et l'endroit de la trace suspectée sera lumineux dans l'image acquise. En revanche, s'il s'agit d'une trace, il n'y aura pas de diffusion, et l'endroit de la trace suspectée ne sera pas lumineux dans l'image acquise.

### Affichage du second motif

Le second motif ainsi déterminé est affiché par l'écran émissif 1, éclairant ainsi la partie du corps humain au contact de la surface 3.

Lorsque le second motif a été déterminé à partir de l'inverse de la distribution spatiale de l'intensité lumineuse dans la première image, l'éclairage du doigt correspond à cette inversion. Ainsi, les zones qui apparaissaient les plus claires dans la première image, telles que l'extrémité 32 du doigt le plus à droite dans la figure 3a, sont éclairées par des zones d'éclairage 42 moins lumineuses que les zones d'éclairage 43 éclairant les zones qui apparaissaient plus sombres dans la première image, telles que l'extrémité 33 du doigt le plus à gauche dans la figure 3a.

Les zones où la partie du corps humain n'est pas en contact avec la surface 3 correspondent aux zones d'absence d'éclairage 44, 45. L'éclairage de la partie imagée du corps humain est concentré sur les zones à exploiter. On limite aussi le risque de faire apparaître dans les images des éléments étrangers à la partie du corps humain à imager, tels que des traces ou des rayures sur la surface 3.

Lorsque le second motif comporte des figures géométriques 62, 72 lumineuses disposées dans le second motif dans des zones 61 correspondant à la localisation de la représentation de la partie du corps humain dans la première image, ces figures géométriques sont projetées sur les zones de la partie du corps humain en regard desdites figures géométriques 62, 72.

### Acquisition de la seconde image

Pendant que la partie du corps humain est éclairée par le second motif affiché par l'écran émissif 1, l'imageur 2 acquiert une seconde image de la partie du corps humain ainsi éclairée. Du fait du changement de motif d'affichage entre l'acquisition de la première image et l'acquisition de la deuxième image, et donc de l'éclairage de la partie du corps humain imagée, la deuxième image est différente de la première image.

La figure 3c montre un exemple de seconde image obtenue après éclairage par le second motif d'affichage illustré par la figure 3b, déterminé à partir de la première image illustrée par la figure 3a.

On constate que l'extrémité 52 du doigt le plus à droite apparaît avec une intensité lumineuse similaire à celle de l'extrémité 53 du doigt le plus à gauche, contrairement à la première image illustrée par la figure 3a. En outre, chaque extrémité des doigts 52, 53 présente une intensité lumineuse plus homogène. L'exploitabilité de la représentation de la partie du corps humain dans la seconde image est donc améliorée par rapport à celle de la première image.

Par ailleurs, le reste 54 des doigts, c'est-à-dire les deux premières phalanges, est moins visible dans la seconde image par rapport au reste 34 dans la première image, puisqu'il n'a pas été éclairé par le second motif. Ces éléments sont donc moins susceptibles de perturber l'analyse ultérieure de la seconde image. De même, la zone 55 de la seconde image correspondant à l'absence de la partie du corps humain, n'étant pas éclairée par le second motif, est moins susceptible de faire apparaître des éléments parasites tels que des salissures.

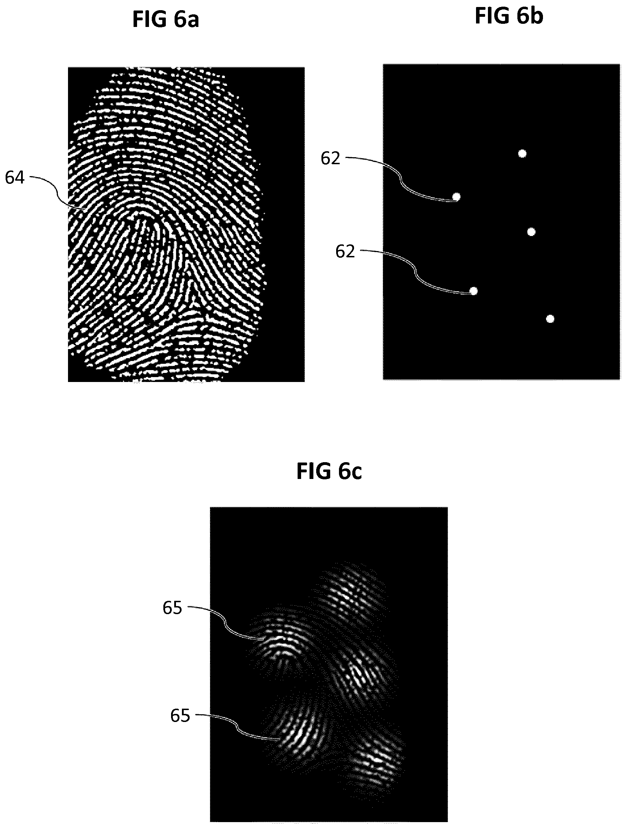

Les figures 6a, 6b et 6c montrent un exemple de mise en oeuvre du second motif similaire à celui illustré par la figure 4, en détaillant une extrémité d'un doigt. Dans la figure 6a, on retrouve le détail de la représentation 64 de cette extrémité du doigt dans une première image. Le second motif déterminé à partir de cette première image est illustré par la figure 6b et comprend des figures géométriques lumineuses constituées par des points 62, disposées en regard de la représentation 64 de l'extrémité du doigt. La figure 6c montre un détail de la deuxième image alors obtenue. Cette deuxième image comprend des zones 65 éclairées correspondant aux projections sur la partie du corps imagée des points 63 du second motif.

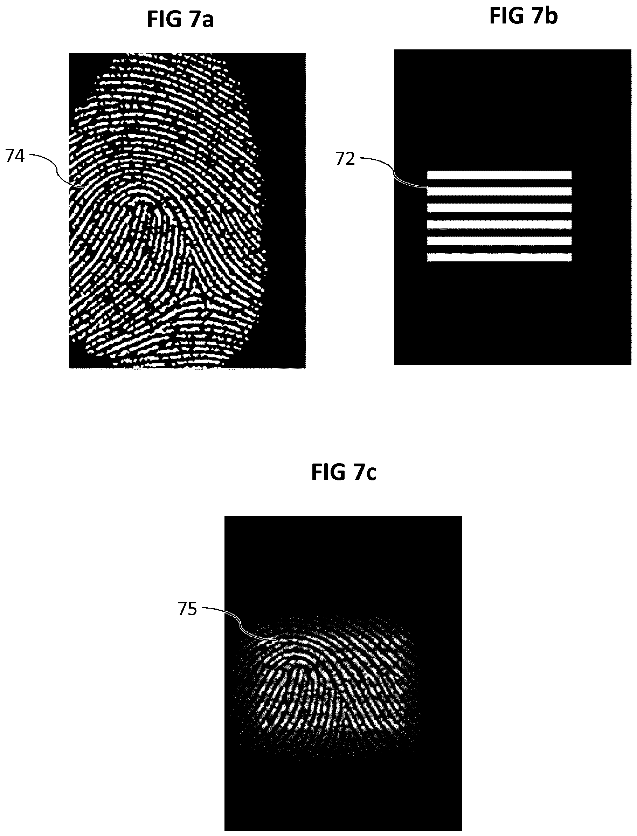

Les figures 7a, 7b et 7c montrent un exemple de mise en oeuvre du second motif similaire à celui illustré par la figure 5, en détaillant une extrémité d'un doigt. Dans la figure 7a, on retrouve le détail de la représentation 74 de cette extrémité du doigt dans une première image. Le second motif déterminé à partir de cette première image est illustré par la figure 7b et comprend des figures géométriques lumineuses constituées par un ensemble de lignes parallèles 72, disposées en regard de la représentation 64 de l'extrémité du doigt. La figure 7c montre un détail de la deuxième image alors obtenue. Cette deuxième image comprend des zones 75 éclairées correspondant aux projections sur la partie du corps imagée de l'ensemble de lignes parallèles 72 du second motif.

Puisque le second motif a été déterminé à partir de la première image, les figures se retrouvent dans la seconde image avec un positionnement correspondant précisément à ce qui est attendu. La précision obtenue par cette projection permet ainsi d'adapter finement le second motif à l'endroit où il est projeté, c'est-à-dire les doigts.

De préférence, l'acquisition de la première image et de la deuxième image se fait dans un intervalle de temps inférieur à 1s, de préférence inférieur à 500 ms, et de préférence encore inférieur à 200 ms. La limitation du temps entre l'acquisition de la première image et l'acquisition de la seconde image permet d'éviter un éventuel déplacement de la partie du corps humain au contact de la surface 3, ou un changement dans les conditions d'acquisition telles que la lumière extérieure.

Il est bien entendu que les étapes du procédé peuvent être itérées, en déterminant un motif d'affichage à partir de la seconde image, de sorte qu'un second motif d'une itération peut devenir le premier motif d'une itération suivante, et la seconde image d'une itération peut devenir la première image d'une itération suivante. De même, il est entendu que le procédé peut déterminer une série de seconds motifs différents à partir d'une même première image et acquérir la série de deuxièmes images correspondantes. Les seconds motifs peuvent par exemple différer par l'éclairage en une localisation donnée d'un point de plusieurs couleurs, de lignes de plusieurs fréquences, de sinus de plusieurs phases...

Par exemple, lors d'une première itération, un second motif peut être déterminé à partir de l'inverse de la distribution spatiale de l'intensité lumineuse dans une première image afin d'homogénéiser l'intensité lumineuse dans la seconde image. A partir de cette seconde image, on peut déterminer un motif d'affichage, par exemple comportant des figures géométriques, qui, affiché par l'écran émissif 1, éclaire la partie du corps humain lors d'une acquisition d'image suivante.

Le second motif déterminé à partir de l'inverse de la distribution spatiale de l'intensité lumineuse peut alors être considéré comme un premier motif, l'image acquise lors de l'éclairage du doigt par celui-ci comme une première image, et le motif d'affichage avec des figures géométriques comme un second motif et l'image suivante comme une seconde image.

L'itération du procédé peut avantageusement être utilisée lorsque le résultat de l'analyse de la seconde image ne permet pas d'atteindre le but visé. Un deuxième second motif peut alors être déterminé en prenant en compte le résultat de l'analyse de la seconde image, et une deuxième seconde image peut être acquise. Par exemple, pour un second motif comportant des figures géométriques sous forme d'ensemble de lignes parallèles rouges avec une période spatiale donnée, par exemple de 0,5 mm, si le traitement biométrique ne permet pas d'arriver aux résultats escomptés, on pourra utiliser un autre second motif comportant des figures géométriques sous forme d'ensemble de lignes parallèles bleues avec la même période spatiale ou une période différente, par exemple de 1 mm.

Par ailleurs, des caractéristiques du second motif peuvent également être propres à révéler la nature d'éventuels artéfacts dans la première image, comme expliqué plus haut. La deuxième image permet ainsi de lever le doute sur le fait qu'une région corresponde à la représentation du doigt ou à un artéfact. Un autre second motif peut alors être déterminé en prenant en compte la mise en évidence de ces artéfacts, avec par exemple une région d'intérêt mieux délimitée.

En déterminant un motif d'affichage à partir de la seconde image, on peut ainsi déterminer au mieux les caractéristiques dudit motif d'affichage afin de pallier les insuffisances des motifs d'affichage ou de compléter ceux-ci, en particulier en changeant les couleurs. Ainsi, si une partie du corps humain présente une réflectivité particulièrement faible ou élevée dans une couleur, un motif d'une autre couleur peut être utilisé ensuite pour confirmer que la réflectivité constatée provient d'une caractéristique de la peau telle que son taux de mélanine, ou bien est le résultat d'une fraude.

On peut également modifier la forme des figures du second motif. Par exemple, pour un second motif comportant des figures sous forme d'ensemble de lignes parallèles avec une période spatiale donnée, on pourra modifier la périodicité des lignes parallèles en fonction des résultats de l'analyse de la seconde image.

L'itération peut également être avantageusement appliquée pour faire converger les caractéristiques des images acquises vers un résultat souhaité. Par exemple, en déterminant successivement des seconds motifs à partir de l'inverse de la distribution spatiale de l'intensité lumineuse dans d'images acquises afin d'homogénéiser l'intensité lumineuse dans les secondes images, on améliorer à chaque fois les caractéristiques des images acquises. En itérant le procédé plusieurs fois, on peut atteindre un niveau d'exigence relativement élevé.

### Mis en oeuvre du traitement biométrique

Un traitement biométrique est mis en oeuvre sur une image finale construite à partir d'au moins la seconde image. Le traitement biométrique peut être mis en oeuvre par le système de traitement automatisé de données qui a déterminé le second motif d'affichage, ou par un autre système de traitement automatisé de données.

L'image finale peut typiquement être la seconde image, mais peut également être construite à partir de deux secondes images, par exemple par combinaison de celles-ci, ou bien encore à partir de la première image et de la seconde image, par exemple par combinaison de celles-ci.

Le traitement biométrique peut comprendre la mise en oeuvre d'un procédé d'identification à partir de caractéristiques biométriques tirées de l'image finale, typiquement à partir d'empreintes digitales. De l'image finale sont extraits des éléments de représentations susceptibles de correspondre à des caractéristiques utilisables pour reconnaître des empreintes digitales, par exemple des lieux de convergence ou de divergences des crêtes ou vallées, ou des minuties, points d'irrégularité se trouvant sur les lignes papillaires telles que terminaisons ou bifurcations. D'autres caractéristiques biométriques peuvent cependant être utilisées pour l'identification, notamment en combinaison entre elles, comme par exemples les positions des pores, la forme des bords de crêtes.

Le traitement biométrique peut comprendre la mise en oeuvre d'un procédé de détection de fraude visant à déterminer que la partie du corps humain imagée est authentique et non une fraude. En particulier, les représentations dans la seconde image des projections des figures géométriques du second motif sur la peau peuvent être spécialement adaptées à cet usage, comme par exemple les projections de points dans la figure 6c ou les projections de lignes parallèles dans la figure 7c.

Le traitement biométrique peut notamment comprendre l'analyse dans l'image finale de la décroissance d'une intensité lumineuse à partir d'endroits de la deuxième image correspondants à des zones de la partie du corps humain éclairées par lesdites figures géométriques.

En effet, la peau humaine présente des caractéristiques d'absorption et de diffusion de la lumière qui lui sont propres, et qui sont difficilement contrefaites avec précision. En outre, ces caractéristiques dépendant de la longueur d'onde, l'utilisation de plusieurs longueurs d'onde augmente d'autant les possibilités de détection.

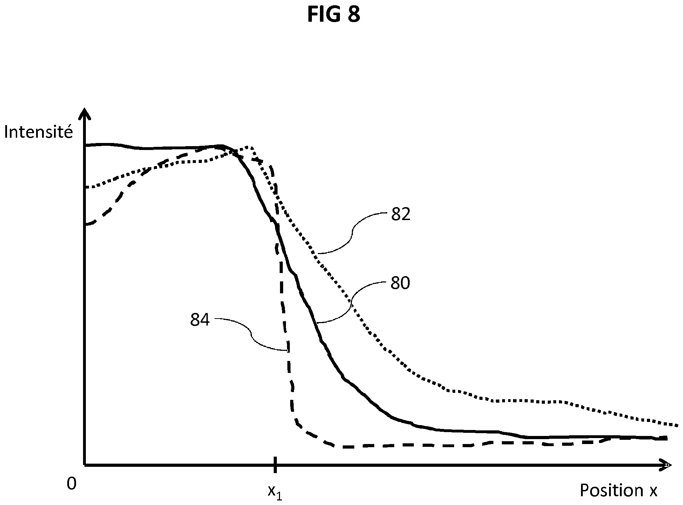

La figure 8 présente des exemples de profils de décroissance de cette intensité lumineuse en fonction de la position, ladite position s'entendant comme l'abscisse le long d'une ligne droite s'éloignant de la projection de la figure. Trois courbes sont représentées. La première courbe 80 correspond à un profil de décroissance de l'intensité lumineuse pour la peau humaine, et donc pour un doigt authentique. La deuxième courbe 82 correspond à un profil de décroissance de l'intensité lumineuse pour de la gélatine ou de la silicone translucide, donc un premier type de fraude. Enfin, la troisième courbe 84 correspond à un profil de décroissance de l'intensité lumineuse pour de la pâte à modeler ou de la silicone blanche, donc un deuxième type de fraude.

Une première partie constituée par les positions de 0 à x₁ correspond à la présence de la projection de la figure dans l'image finale, dont le bord se situe à la position x₁. Certaines irrégularités sont présentes dans cette première partie, pour les différentes courbes 80, 82, 84. Ces irrégularités sont essentiellement dues à l'imprécision des bords des différents objets présentés au capteur, mais également aux caractéristiques différentes des matériaux, par exemple en termes de réflexivité. Ainsi, cette première partie n'est pas idéale pour la mise en oeuvre de la détection.

La seconde partie, commençant à partir de x₁, correspond à l'intensité lumineuse en dehors de la projection de la figure dans l'image finale, et rend compte de la diffusion et de l'absorption de la lumière à partir de la figure projetée. Les formes décroissantes des courbes 80, 82, 84 sont plus riches en termes de caractéristiques propres (pente, inflexion, écarts, etc.) dans la première partie. Cette seconde partie est donc la partie privilégiée pour détecter les fraudes.

Comme on peut le voir sur la figure 8, par rapport au profil de décroissance représenté par la courbe 80 d'un doigt authentique, les autres profils de décroissance représentés par les courbes 82, 84 en diffèrent par plusieurs aspects.

Ces différences peuvent être mises en évidence de différentes façons. On peut par exemple directement comparer les valeurs prises par le profil de décroissance extrait de l'image finale analysée avec une base de données de profils de décroissance considérés comme authentiques, en déterminant un critère de similarité, par exemple par la méthode des moindres carrés. Ainsi, un profil de décroissance dont le critère de similarité serait trop éloigné d'un intervalle de variation toléré serait considéré comme représentatif du caractère non authentique de la partie du corps imagée. De façon similaire, on pourrait également utiliser une base de données de profils de décroissance considérés comme des fraudes.

Une autre façon est d'extraire des caractéristiques du profil de décroissance, et de les comparer avec des plages de valeurs jugées acceptables pour une peau authentique. On peut par exemple déterminer une valeur de gradient de la décroissance à un endroit donné, ou par exemple déterminer un point d'inflexion ou tout autre caractéristique pertinente. Bien sûr, et de préférence, plusieurs techniques peuvent être combinées entre elles.

On peut également construire des indices plus complexes pour mettre en valeur ces différences. Un exemple d'un tel indice est un indice de modulation, construit à partir d'un rapport faisant intervenir l'intensité maximale et l'intensité minimale rencontrée sur une distance donnée. Un tel indice est avantageusement utilisé avec des figures géométriques périodiques, telles que les lignes parallèles 72 de la figure 5 ou bien encore des sinusoïdes. En parcourant la seconde image perpendiculairement aux lignes parallèles 72, on peut déterminer un indice de modulation pour chaque intervalle entre les lignes. En comparant les valeurs de ces indices avec des seuils, on peut détecter les fraudes.

D'autres méthodes exploitant la décroissance de l'intensité lumineuse peuvent être employées, par exemple en faisant intervenir des méthodes plus évoluées telles que des transformations de Fourier.

Encore une fois, le procédé peut être itéré en déterminant de nouveaux second motifs d'illumination et en contrôlant la validité de l'acquisition obtenue. C'est en particulier intéressant d'adapter l'intensité de l'éclairage pour obtenir un signal suffisant de profile de décroissance ou toute autre détection de fraude pour les doigts pigmentés.

Une étape préalable d'acquisition d'une base de données de caractéristiques propres à une authentique peau humaine peut être nécessaire. Les différents seuils ou valeurs utilisées pour détecter les fraudes peuvent être déterminées empiriquement au moyen du test d'une banque d'échantillons authentiques et de fraudes.

Ainsi, en étudiant dans l'image finale la décroissance spatiale de l'intensité lumineuse correspondant à la projection d'une figure sur la peau, et en comparant celle-ci ou un critère dérivée de celle-ci à des données de référence, on peut déterminer l'authenticité ou non de la partie de corps humain présentée.

## Revendications

1. Procédé de traitement biométrique d'images d'une partie du corps humain présentant des crêtes papillaires pour la détection de fraude visant à déterminer que la partie du corps humain imagée est authentique, ledit procédé traitement biométrique étant mis en oeuvre par un capteur comprenant :
- un système de traitement automatisé de données,
- un écran émissif (1) comprenant une matrice de pixels (4) individuellement commandables, l'état des pixels définissant un motif d'affichage de l'écran émissif,
- un substrat sur lequel sont réalisés des éléments sensibles à la lumière constituant un imageur (2) et partageant l'orientation de l'écran émissif (1),
ledit capteur comprenant une surface (3) adaptée pour recevoir en contact une partie du corps humain à imager, ledit écran émissif (1) étant configuré pour éclairer ladite partie du corps humain à imager lorsqu'elle est en contact avec la surface (3),
ledit procédé comprenant les étapes selon lesquelles, pour acquérir des images d'une partie du corps humain présentant des crêtes papillaires au contact de la surface (3):
- l'écran émissif (1) affiche au moins un premier motif d'affichage pour éclairer ladite partie du corps humain et l'imageur (2) acquiert au moins une première image de ladite partie du corps humain,
- à partir de cette première image, le système de traitement automatisé de données détermine au moins un second motif d'affichage différent du premier motif d'affichage, la détermination du second motif comprenant une analyse de la première image pour localiser une représentation (32, 33) de la partie du corps humain dans ladite première image, et la détermination du second motif comprend le positionnement de zones d'éclairages (42, 43, 62, 72) dans le second motif correspondant à la localisation de la représentation de la partie du corps humain dans la première image, lesdites zones d'éclairage du second motif comprenant des figures géométriques (62, 72) lumineuses distinctes et séparées,
- l'écran émissif (1) affiche au moins le second motif pour éclairer ladite partie du corps humain de sorte que la partie du corps humain en contact avec la surface est éclairée par lesdites zones d'éclairage lorsque l'écran émissif (1) affiche le second motif, et l'imageur (2) acquiert au moins une deuxième image de ladite partie du corps humain,
- un traitement biométrique est mis en oeuvre sur une image finale construite à partir d'au moins la deuxième image, ledit traitement biométrique comprenant la mise en oeuvre d'un procédé de détection de fraude visant à déterminer que la partie du corps humain imagée est authentique au moyen des représentations dans la seconde image des projections des figures géométriques lumineuses du second motif.

2. Procédé biométrique selon la revendication 1, dans lequel le traitement biométrique de la deuxième image comprend une étape de détection, parmi les pixels de ladite deuxième image, des pixels correspondant à des crêtes papillaires.

3. Procédé selon l'une des revendications 1 à 2, dans lequel la détermination du second motif comprend une détermination de la distribution spatiale de l'intensité lumineuse dans la première image, et le second motif est déterminé à partir de l'inverse de ladite distribution spatiale.

4. Procédé selon la revendication 1, dans lequel le traitement biométrique comprend l'analyse dans l'image finale de la décroissance d'une intensité lumineuse à partir d'endroits de la deuxième image correspondant aux projections (63, 73) desdites figures géométriques (62, 72) sur la partie du corps humain éclairées par le second motif affiché par l'écran émissif (1).

5. Procédé selon l'une des revendications 1 à 4, dans lequel la détermination du second motif comprend une analyse de la première image pour localiser la représentation (32, 33) au moins partielle de la partie du corps humain dans la première image, et les figures géométriques (62, 72) du second motif sont localisées dans le second motif d'affichage au niveau d'une zone (61) correspondant à ladite représentation de la partie du corps humain dans la première image, de sorte que les figures géométriques (62, 72) sont affichées par l'écran émissif (1) en regard de la partie du corps humain.

6. Procédé selon la revendication 5, dans lequel l'analyse de la première image comprend la localisation dans la représentation (32, 33) de la partie du corps humain dans la première image d'une région représentative d'une particularité visuelle de ladite partie du corps humain, et la zone (61) dans laquelle sont localisées les figures géométriques (62, 72) du second motif correspond à ladite région représentative d'une particularité visuelle de ladite partie du corps humain, de sorte que les figures géométriques (62, 72) sont affichées par l'écran émissif (1) en regard de ladite région représentative d'une particularité visuelle de ladite partie du corps humain.

7. Procédé selon l'une des revendications 1 à 6, dans lequel les figures géométriques (62) du second motif sont espacées d'au moins 2 mm entre elles et sont disposées aléatoirement

8. Procédé selon l'une quelconque des revendications précédentes, dans lequel plusieurs seconds motifs d'affichage sont déterminés à partir de la première image, et, successivement pour au moins plusieurs desdits second motifs d'affichage, l'écran émissif (1) affiche au moins un desdits seconds motifs pour éclairer ladite partie du corps humain et l'imageur (2) acquiert au moins une deuxième image de ladite partie du corps humain.

9. Procédé selon la revendication 8, dans lequel au moins un desdits seconds motifs est constitué de couleurs dans des longueurs d'onde inférieures à 600 nm et un autre desdits second motifs est constitué de couleurs dans des longueurs d'onde supérieures à 600 nm.

10. Produit programme d'ordinateur comprenant des instructions de code de programme pour l'exécution des étapes du procédé selon l'une quelconque des revendications précédentes lorsque ledit programme est exécuté par un ordinateur.

11. Capteur comprenant :
- un système de traitement automatisé de données,
- un écran émissif (1) comprenant une matrice de pixels (4) individuellement commandables, l'état des pixels définissant un motif d'affichage de l'écran émissif,
- un substrat sur lequel sont réalisés des éléments sensibles à la lumière constituant un imageur (2) et partageant l'orientation de l'écran émissif (1),
ledit capteur comprenant une surface (3) adaptée pour recevoir en contact une partie du corps humain à imager, ledit écran émissif (1) étant configuré pour éclairer ladite partie du corps humain à imager lorsqu'elle est en contact avec la surface (3),
ledit capteur étant configuré pour mettre en oeuvre le procédé selon l'une des revendications 1 à 9, dans lequel pour acquérir des images d'une partie du corps humain présentant des crêtes papillaires au contact de la surface (3):
- l'écran émissif (1) affiche au moins un premier motif d'affichage pour éclairer ladite partie du corps humain et l'imageur (2) acquiert au moins une première image de ladite partie du corps humain,
- à partir de cette première image, le système de traitement automatisé de données détermine au moins un second motif d'affichage différent du premier motif, la détermination du second motif comprenant une analyse de la première image pour localiser une représentation (32, 33) de la partie du corps humain dans ladite première image, et la détermination du second motif comprend le positionnement de zones d'éclairages (42, 43, 62, 72) dans le second motif correspondant à la localisation de la représentation de la partie du corps humain dans la première image, lesdites zones d'éclairage du second motif comprenant des figures géométriques (62, 72) lumineuses distinctes et séparées,
- l'écran émissif (1) affiche au moins le second motif pour éclairer ladite partie du corps humain de sorte que la partie du corps humain en contact avec la surface est éclairée par lesdites zones d'éclairage lorsque l'écran émissif (1) affiche le second motif, et l'imageur (2) acquiert au moins une deuxième image de ladite partie du corps humain,
- un traitement biométrique est mis en oeuvre sur une image finale construite à partir d'au moins la deuxième image, ledit traitement biométrique comprenant la mise en oeuvre d'un procédé de détection de fraude visant à déterminer que la partie du corps humain imagée est authentique au moyen des représentations dans la seconde image des projections des figures géométriques lumineuses du second motif.

## Patentansprüche

1. Verfahren zur biometrischen Verarbeitung von Bildern eines Teils des menschlichen Körpers, aufweisend Fingerlinien, für die Entdeckung von Betrug, das darauf abzielt zu bestimmen, dass der abgebildete Teil des menschlichen Körpers authentisch ist, wobei das biometrische Verarbeitungsverfahren von einem Sensor umgesetzt wird, der umfasst:
- ein automatisiertes Datenverarbeitungssystem,
- einen Emissionsbildschirm (1), umfassend eine Matrix individuell steuerbarer Pixel (4), wobei der Zustand der Pixel ein Anzeigemotiv des Emissionsbildschirms definiert,
- ein Substrat, auf dem lichtempfindliche Elemente realisiert sind, die einen Bildgeber (2) bilden und die Ausrichtung des Emissionsbildschirms (1) teilen,
wobei der Sensor eine Fläche (3) umfasst, die ausgebildet ist, um im Kontakt einen abzubildenden Teil des menschlichen Körpers zu empfangen, wobei der Emissionsbildschirm (1) konfiguriert ist, um den abzubildenden Teil des menschlichen Körpers zu beleuchten, wenn er mit der Fläche (3) im Kontakt ist,
wobei das Verfahren die Schritte umfasst, gemäß denen, um Bilder eines Teils des menschlichen Körpers, der Fingerlinien aufweist, im Kontakt mit der Fläche (3) zu erfassen:
- der Emissionsbildschirm (1) mindestens ein erstes Anzeigemotiv anzeigt, um den Teil des menschlichen Körpers zu beleuchten, und der Bildgeber (2) mindestens ein erstes Bild des Teils des menschlichen Körpers erfasst,
- das automatisierte Datenverarbeitungssystem auf der Basis dieses ersten Bildes mindestens ein zweites Anzeigemotiv bestimmt, das sich von dem ersten Anzeigemotiv unterscheidet, wobei die Bestimmung des zweiten Motivs eine Analyse des ersten Bildes umfasst, um eine Darstellung (32, 33) des Teils des menschlichen Körpers in dem ersten Bild zu lokalisieren, und die Bestimmung des zweiten Motivs die Positionierung von Beleuchtungszonen (42, 43, 62, 72) in dem zweiten Motiv umfasst, die der Lokalisierung der Darstellung des Teils des menschlichen Körpers in dem ersten Bild entsprechen, wobei die Beleuchtungszonen des zweiten Motivs unterschiedliche und getrennte leuchtende geometrische Figuren (62, 72) umfassen,
- der Emissionsbildschirm (1) mindestens das zweite Motiv anzeigt, um den Teil des menschlichen Körpers derart zu beleuchten, dass der Teil des menschlichen Körpers im Kontakt mit der Fläche durch die Beleuchtungszonen beleuchtet wird, wenn der Emissionsbildschirm (1) das zweite Motiv anzeigt, und der Bildgeber (2) mindestens ein zweites Bild des Teils des menschlichen Körpers erfasst,
- eine biometrische Verarbeitung eines abschließenden Bildes durchgeführt wird, das auf der Basis von mindestens dem zweiten Bild konstruiert ist, wobei die biometrische Verarbeitung die Durchführung eines Betrugsdetektionsverfahrens umfasst, das mittels Darstellungen im zweiten Bild von Projektionen der leuchtenden geometrischen Figuren des zweiten Motivs darauf abzielt zu bestimmen, dass der abgebildete Teil des menschlichen Körpers authentisch ist.

2. Biometrisches Verfahren nach Anspruch 1, wobei die biometrische Verarbeitung des zweiten Bildes einen Schritt der Detektion aus den Pixeln des zweites Bildes der Pixel umfasst, die Fingerlinien entsprechen.

3. Verfahren nach einem der Ansprüche 1 bis 2, wobei die Bestimmung des zweiten Motivs eine Bestimmung der räumlichen Verteilung der Lichtstärke im ersten Bild umfasst, und das zweite Motiv auf der Basis der Umgekehrten der räumlichen Verteilung bestimmt wird.

4. Verfahren nach Anspruch 1, wobei die biometrische Verarbeitung die Analyse der Abnahme einer Lichtstärke im abschließenden Bild auf der Basis von Stellen des zweiten Bildes umfasst, die den Projektionen (63, 73) der geometrischen Figuren (62, 72) auf den Teil des menschlichen Körpers entsprechen, die von dem zweiten Motiv beleuchtet werden, das von dem Emissionsbildschirm (1) angezeigt wird.

5. Verfahren nach einem der Ansprüche 1 bis 4, wobei die Bestimmung des zweiten Motivs eine Analyse des ersten Bildes umfasst, um die mindestens teilweise Darstellung (32, 33) des Teils des menschlichen Körpers im ersten Bild zu lokalisieren, und die geometrischen Figuren (62, 72) des zweiten Motivs in dem zweiten Anzeigemotiv im Bereich einer Zone (61) lokalisiert sind, die der Darstellung des Teils des menschlichen Körpers im ersten Bild entspricht, so dass die geometrischen Figuren (62, 72) von dem Emissionsbildschirm (1) gegenüber dem Teil des menschlichen Körpers angezeigt werden.

6. Verfahren nach Anspruch 5, wobei die Analyse des ersten Bildes die Lokalisierung in der Darstellung (32, 33) des Teils des menschlichen Körpers im ersten Bild einer Region umfasst, die für eine visuelle Besonderheit des Teils des menschlichen Körpers repräsentativ ist, und die Zone (61), in welcher die geometrischen Figuren (62, 72) des zweiten Motivs lokalisiert sind, der Region entspricht, die für eine visuelle Besonderheit des Teils des menschlichen Körpers repräsentativ ist, so dass die geometrischen Figuren (62, 72) von dem Emissionsbildschirm (1) gegenüber der Region angezeigt werden, die für eine visuelle Besonderheit des Teils des menschlichen Körpers repräsentativ ist.

7. Verfahren nach einem der Ansprüche 1 bis 6, wobei die geometrischen Figuren (62) des zweiten Motivs um mindestens 2 mm voneinander beabstandet und nach dem Zufallsprinzip angeordnet sind.

8. Verfahren nach einem der vorangehenden Ansprüche, wobei mehrere zweite Anzeigemotive auf der Basis des ersten Bildes bestimmt werden und der Emissionsbildschirm (1) aufeinanderfolgend für mindestens mehrere der zweiten Anzeigemotive mindestens eins der zweiten Motive anzeigt, um den Teil des menschlichen Körpers zu beleuchten, und der Bildgeber (2) mindestens ein zweites Bild des Teils des menschlichen Körpers erfasst.

9. Verfahren nach Anspruch 8, wobei mindestens eins der zweiten Motive von Farben in Wellenlängen unter 600 nm gebildet ist und ein anderes der zweiten Motive von Farben in Wellenlängen über 600 nm gebildet ist.

10. Rechnerprogrammprodukt, umfassend Programmcodebefehle für die Ausführung der Schritte des Verfahrens nach einem der vorangehenden Ansprüche, wenn das Programm von einem Rechner ausgeführt wird.

11. Sensor, umfassend:
- ein automatisiertes Datenverarbeitungssystem,
- einen Emissionsbildschirm (1), umfassend eine Matrix individuell steuerbarer Pixel (4), wobei der Zustand der Pixel ein Anzeigemotiv des Emissionsbildschirms definiert,
- ein Substrat, auf dem lichtempfindliche Elemente realisiert sind, die einen Bildgeber (2) bilden und die Ausrichtung des Emissionsbildschirms (1) teilen,
wobei der Sensor eine Fläche (3) umfasst, die ausgebildet ist, um im Kontakt einen abzubildenden Teil des menschlichen Körpers zu empfangen, wobei der Emissionsbildschirm (1) konfiguriert ist, um den abzubildenden Teil des menschlichen Körpers zu beleuchten, wenn er mit der Fläche (3) im Kontakt ist,
wobei der Sensor konfiguriert ist, um das Verfahren nach einem der Ansprüche 1 bis 9 durchzuführen, wobei, um Bilder eines Teils des menschlichen Körpers zu erfassen, der Fingerlinien im Kontakt mit der Fläche (3) aufweist:
- der Emissionsbildschirm (1) mindestens ein erstes Anzeigemotiv anzeigt, um den Teil des menschlichen Körpers zu beleuchten, und der Bildgeber (2) mindestens ein erstes Bild des Teils des menschlichen Körpers erfasst,
- das automatisierte Datenverarbeitungssystem auf der Basis von diesem ersten Bild mindestens ein zweites Anzeigemotiv bestimmt, das sich von dem ersten Anzeigemotiv unterscheidet, wobei die Bestimmung des zweiten Motivs eine Analyse des ersten Bildes umfasst, um eine Darstellung (32, 33) des Teils des menschlichen Körpers in dem ersten Bild zu lokalisieren, und die Bestimmung des zweiten Motivs die Positionierung von Beleuchtungszonen (42, 43, 62, 72) in dem zweiten Motiv umfasst, die der Lokalisierung der Darstellung des Teils des menschlichen Körpers in dem ersten Bild entsprechen, wobei die Beleuchtungszonen des zweiten Motivs unterschiedliche und getrennte leuchtende geometrische Figuren (62, 72) umfassen,
- der Emissionsbildschirm (1) mindestens das zweite Motiv anzeigt, um den Teil des menschlichen Körpers derart zu beleuchten, dass der Teil des menschlichen Körpers im Kontakt mit der Fläche durch die Beleuchtungszonen beleuchtet wird, wenn der Emissionsbildschirm (1) das zweite Motiv anzeigt, und der Bildgeber (2) mindestens ein zweites Bild des Teils des menschlichen Körpers erfasst,
- eine biometrische Verarbeitung eines abschließenden Bildes durchgeführt wird, das auf der Basis von mindestens dem zweiten Bild konstruiert ist, wobei die biometrische Verarbeitung die Durchführung eines Betrugsdetektionsverfahrens umfasst, das mittels Darstellungen im zweiten Bild von Projektionen der leuchtenden geometrischen Figuren des zweiten Motivs darauf abzielt zu bestimmen, dass der abgebildete Teil des menschlichen Körpers authentisch ist.

## Claims

1. A method for biometric processing of images of part of the human body having papillary ridges for fraud detection aimed at determining that the imaged part of the human body is authentic, said biometric processing method being performed by a sensor comprising:
- an automated data-processing system,
- an emissive screen (1) comprising an array of individually controllable pixels (4), the state of the pixels defining a display pattern of the emissive screen,
- a substrate on which are disposed elements sensitive to light constituting an imager (2) and sharing the orientation of the emissive screen (1),
said sensor comprising a surface (3) adapted to receive in contact a part of the human body to be imaged, said emissive screen (1) being configured to light said part of the human body to be imaged when said part of the human body is in contact with the surface (3),
said method comprising the steps according to which, to acquire images of part of the human body having papillary ridges on contact with the surface (3) :
- the emissive screen (1) displays at least one first display pattern to light said part of the human body and the imager (2) acquires at least one first image of said part of the human body,
- from this first image, the automated data-processing system determines at least one second display pattern different to the first display pattern, the determination of the second pattern comprising analysis of the first image to locate a representation (32, 33) of the part of the human body in said first image, and determination of the second pattern comprises positioning lighting zones (42, 43, 62, 72) in the second pattern corresponding to the location of the representation of the part of the human body in the first image, said lighting zones of the second pattern comprising luminous geometric figures (62, 72) which are distinct and separate,
- the emissive screen (1) displays at least the second pattern to light said part of the human body so that said part of the human body in contact with the surface is illuminated by said lighting zones when the emissive screen (1) displays the second pattern, and the imager (2) acquires at least one second image of said part of the human body,
- biometric processing is performed on a final image constructed from at least the second image, said biometric processing comprising performing a method for fraud detection aimed at determining that the imaged part of the human body is authentic by means of representations in the second image of projections of the luminous geometric figures of the second pattern.

2. The biometric method according to claim 1, wherein biometric processing of the second image comprises a step for detecting, among the pixels of said second image, the pixels corresponding to papillary ridges.

3. The method according to one of claims 1 to 2, wherein determination of the second pattern comprises determination of the spatial distribution of the light intensity in the first image, and the second pattern is determined from the inverse of said spatial distribution.

4. The method according to claim 1, wherein biometric processing comprises analysis in the final image of the decrease in light intensity from sites of the second image corresponding to the projections (63, 73) of said geometric figures (62, 72) on the part of the human body lit by the second pattern displayed by the emissive screen (1).

5. The method according to one of claims 1 to 4, wherein determination of the second pattern comprises analysis of the first image to locate the at least partial representation (32, 33) of the part of the human body in the first image, and the geometric figures (62, 72) of the second pattern are located in the second display pattern at a zone (61) corresponding to said representation of the part of the human body in the first image, such that the geometric figures (62, 72) are displayed by the emissive screen (1) facing the part of the human body.

6. The method according to claim 5, wherein analysis of the first image comprises localising in the representation (32, 33) of the part of the human body in the first image a region representative of a particular visual feature of said part of the human body, and the zone (61) in which are located the geometric figures (62, 72) of the second pattern corresponds to said region representative of a particular visual feature of said part of the human body, such that the geometric figures (62, 72) are displayed by the emissive screen (1) facing said region representative of a particular visual feature of said part of the human body.

7. The method according to one of claims 1 to 6, wherein the geometric figures (62) of the second pattern are spaced apart by at least 2 mm and are arranged randomly.

8. The method according to any one of the preceding claims, wherein several second display patterns are determined from the first image, and, successively for at least several of said second display patterns, the emissive screen (1) displays at least one of said second patterns to light said part of the human body and the imager (2) acquires at least one second image of said part of the human body.

9. The method according to claim 8, wherein at least one of said second patterns is constituted by colors in wavelengths less than 600 nm and another of said second patterns is constituted by colors in wavelengths greater than 600 nm.

10. A computer program product comprising program code instructions for executing the steps of the method according to any one of the preceding claims when said program is executed by a computer.

11. A sensor comprising:
- an automated data-processing system,
- an emissive screen (1) comprising an array of individually controllable pixels (4), the state of the pixels defining a display pattern of the emissive screen,
- a substrate on which are disposed elements sensitive to light constituting an imager (2) and sharing the orientation of the emissive screen (1),
said sensor comprising a surface (3) adapted to receive in contact a part of the human body to be imaged, said emissive screen (1) being configured to light said part of the human body to be imaged when said part of the human body is in contact with the surface (3),
said sensor being configured to perform the method according to one of claims 1 to 9, wherein to acquire images of part of the human body having papillary ridges on contact with the surface (3):
- the emissive screen (1) displays at least one first display pattern to light said part of the human body and the imager (2) acquires at least one first image of said part of the human body,
- from this first image, the automated data-processing system determines at least one second display pattern different to the first pattern, the determination of the second pattern comprises analysis of the first image to locate a representation (32, 33) of the part of the human body in said first image, and determination of the second pattern comprises positioning lighting zones (42, 43, 62, 72) in the second pattern corresponding to the location of the representation of the part of the human body in the first image, said lighting zones of the second pattern comprising luminous geometric figures (62, 72) which are distinct and separate,
- the emissive screen (1) displays at least the second pattern to light said part of the human body so that said part of the human body contacting the surface is lit by said lighting zones when the emissive screen (1) displays the second pattern, and the imager (2) acquires at least one second image of said part of the human body,
- biometric processing is performed on a final image constructed from at least the second image, said biometric processing comprising performing a method for fraud detection aimed at determining that the imaged part of the human body is authentic by means of representations in the second image of projections of the luminous geometric figures of the second pattern.
